# EUROPEAN PATENT APPLICATION

(11) **EP 4 492 424 A2**
(43) Date of publication of application: **15.01.2025**
(21) Application number: 24187523.6
(22) Date of filing: 09.07.2024
(51) Int. Cl.: H01H 47/00

(54) **ELECTRICAL LOAD CONTROL MONITORING UNITS (LCMUS)**

(30) Priority: 10.07.2023 US 202318219888
(71) Applicant: Hamilton Sundstrand Corporation, Charlotte, NC 28217-4578 (US)
(72) Inventor: BELISLE, Francis C., Beloit, 53511 (US); SWENSON, Joshua C., Rockford, 61107 (US); COONEY, Robert C., Janesville, 53546 (US); YANG, Nhia, Roscoe, 61073 (US); BARKER, Matthew A., Byron, 61010 (US); MORMAN, Darin R., Rockford, 61107 (US); WAVERING, Jeffrey T., Rockford, 61109 (US); SEGER, Mark, Rockford, 61108 (US)
(74) Representative: Dehns

(57) **Abstract**

A method of power switching includes receiving a command from an external aircraft controller to power an aircraft load from an aircraft voltage bus. The method includes in response to the command from the external aircraft controller (146), controlling a relay (110) to connect or disconnect an aircraft voltage bus from an aircraft load. Controlling the relay includes current monitoring the relay and voltage monitoring the relay power switching. The method can include receiving temperature feedback indicative of temperature of the relay, and using the temperature feedback for at least one of controlling the relay and/or prognostic and health monitoring. The method can include outputting feedback to the external aircraft controller relating to status, operation, and health of the relay.

## Description

### BACKGROUND

### 1. Field

The present disclosure relates to electrical relays, and more particularly to electrical load control monitoring for electoral relay systems.

### 2. Description of Related Art

Electrical relays with coil drives include electrical load control (ELC). Typical electrical ELC modules provides over current monitoring of power switched by the relay and trip control of coils by the coil drive. The ELC is often a separate module with functions of current versus time (also known as I²t or I^2t) protection and coil power drive based on external control. The ELC typically includes protection against coil amperage, but coil current is temperature dependent where low temperature wiring can sustain higher current without damage compared to a high temperature conditions.

The conventional techniques have been considered satisfactory for their intended purpose. However, there is an ever present need for improved systems and methods for control and monitoring in electrical relays, coils, and coil drivers. This disclosure provides a solution for this need.

### SUMMARY

A system includes a load control monitoring unit (LCMU). The LCMU includes a controller operatively connected for input and output with an aircraft interface and a coil driver operatively connected to be controlled by the controller. A relay is operatively connected to the LCMU for controlling connection and disconnection of an aircraft voltage bus to and from an aircraft load. The relay includes a coil operatively connected to be powered by the coil driver, an auxiliary switching device operatively coupled to be actuated by a magnetic field from the coil, and a main switching device operatively connected to be actuated by the magnetic field from the coil. The auxiliary switching device is operatively connected to the controller to provide feedback indicative of position of the main switching device. A current sensor is operatively connected to a load side of the main switching device and to the controller to provide current feedback to the controller indicative of current in the load side of the main switching device. A voltage sensor is operatively connected to a voltage bus side of the main switching device and to the controller to provide voltage feedback to the controller indicative of current in the voltage bus side of the main switching device. The controller is configured to control the coil driver to control the main switching device, and to provide overvoltage protection for the relay.

The controller can be configured to open the main switching device of the relay for overvoltage (OV) protection in the presence of unacceptable voltages sensed by the voltage sensor. The controller can be configured to use the voltage feedback to monitor for under-voltage for prognostic and health monitoring (PHM). The controller can be configured to use the current feedback to open the main switching device of the relay for overcurrent (OC) protection in the presence of unacceptable current sensed by the current sensor.

A temperature sensor can be operatively connected to the relay and to the controller to communicate temperature feedback to the controller indicative of temperature of the relay. The controller can be configured to use temperature feedback for prognostic and heath monitoring (PHM).

The aircraft voltage bus can be operatively connected to the voltage bus side of the main switching device. The aircraft load can be operatively connected to the load side of the main switching device. The controller can be configured to control the coil driver to close the main switching device to connect the aircraft load to be supplied by the aircraft voltage bus in a first position of the main switching device, and to control the coil driver to open the main switching device to disconnect the aircraft load from being supplied by the aircraft voltage bus in a second position of the main switching device.

The coil driver can be configured to receive a command from the controller to close the main switching device, and in response to issue a first pulse width modulation (PWM) current to the coil for a first period of time for closing the main switching device followed by a second period with a second PWM current for holding the main switching device closed. The second PWM current can have a lower duty cycle than the first PWM current. The controller can be configured to adjust current levels during the first period based on temperature feedback.

The coil can be a pull-in coil and the relay includes a holding coil operatively connected to the coil driver and to the main switching device. The coil driver can be configured to receive a command from the controller to close the main switching device, and in response to drive current to the pull-in coil and to the holding coil for a first period of time for closing the main switching device, followed by depowering the pull-in coil and driving current only to the holding coil for holding the main switching device closed. The controller can be configured to adjust current levels during the first period based on temperature feedback.

A communication bus can be operatively connecting the controller to an external aircraft controller for control and status of the relay. The controller can be configured to count operating power cycles of the relay for prognostic and health monitoring (PHM) of relay operating life.

A method of power switching includes receiving a command from an external aircraft controller to power an aircraft load from an aircraft voltage bus. The method includes in response to the command from the external aircraft controller, controlling a relay to connect or disconnect an aircraft voltage bus from an aircraft load. Controlling the relay includes current monitoring the relay and voltage monitoring the relay.

Controlling the relay can include receiving voltage feedback indicative of voltage across the relay and controlling the relay to open and disconnect the aircraft load from the aircraft voltage bus as needed for overvoltage (OV) protection. The method can include communicating voltage data to the external aircraft controller for prognostic and health monitoring (PHM). Controlling the relay can include receiving current feedback indicative of current passing through the relay from the aircraft voltage bus to the aircraft load, and controlling the relay to open and disconnect the aircraft load from the aircraft voltage bus as needed for overcurrent (OC) protection. The method can include communicating current data to the external aircraft controller for prognostic and health monitoring (PHM). The method can include receiving temperature feedback indicative of temperature of the relay, and using the temperature feedback for at least one of controlling the relay and/or predictive health monitoring. The method can include outputting feedback to the external aircraft controller relating to status, operation, and health of the relay.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing the relay and controller; and
Fig. 2 is a control block diagram for the system of Fig. 1, showing flow of information to and from components of the system.

### DETAILED DESCRIPTION OF THE PREFERRED EMBODIMENTS

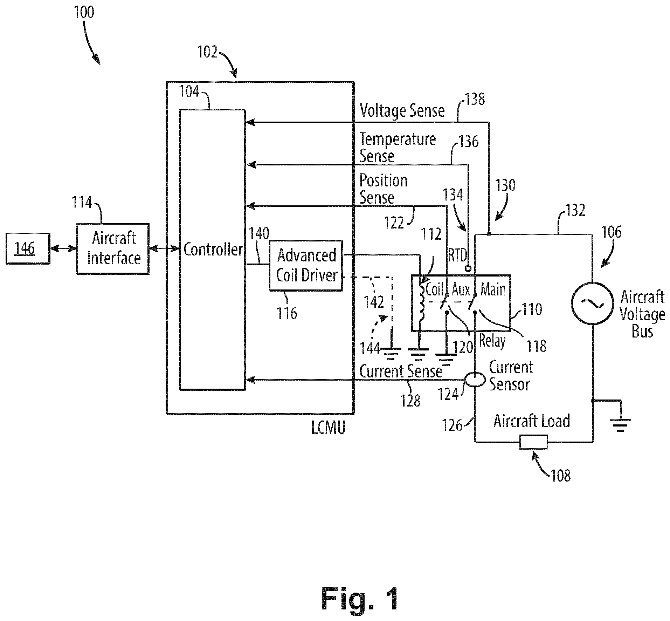

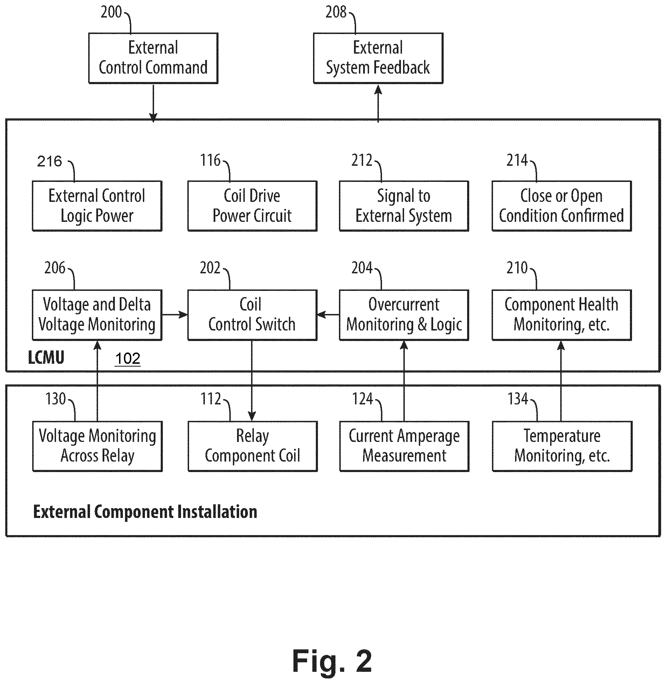

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to control relays such as used in aircraft. Relays herein includes relays and contactors. Systems and methods as disclosed herein can providing overcurrent (OC).

The system 100 includes a load control monitoring unit (LCMU) 102. The LCMU 102 includes a controller 104 operatively connected for input and output with an aircraft interface 114 and a coil driver 116 operatively connected to be controlled by the controller 104. A relay 110 is operatively connected to the LCMU 102 for controlling connection and disconnection of an aircraft voltage bus 106 to and from an aircraft load 108. The relay 110 includes a coil 112 operatively connected to be powered by the coil driver 116. An auxiliary switching device 118 is operatively coupled to be actuated by a magnetic field from the coil 112. A main switching device 120 is also operatively connected to be actuated by the magnetic field from the coil 112. The auxiliary switching device 118 is operatively connected to the controller 104, e.g. by line 122, to provide feedback indicative of position of the main switching device 120. This allows for contactor/relay position status to be read by the controller 104 for system control, monitoring, and reporting to electrical system controller.

A current sensor 124 is operatively connected to a load side or line 126 of the main switching device 120, and to the controller by line 128 to provide feedback to the controller 104 indicative of electrical current in the load side of the main switching device 120. The controller 104 is configured to use the current feedback to open the main switching device 120 of the relay 110 for overcurrent (OC) protection in the presence of unacceptable current sensed by the current sensor, e.g. to provide trip over current curve (I^2t) control of the switch gear output.

A voltage sensor 130 is operatively connected to a voltage bus side or line 132 of the main switching device 120 for sensing voltage of the aircraft voltage bus 106 and is connected to the controller 104 by line 138 to provide voltage feedback to the controller 104 indicative of current in the voltage bus side of the main switching device 120. The controller 104 is configured, e.g. with logic, machine readable instructions, or the like, to perform its functions including to control the coil driver 116 to control the main switching device 120 by powering and depowering the coil 112, and to provide overvoltage protection for the relay 110. The arrows in Fig. 1 indicate information direction, and are not symbolic of amplifiers or logic gates.

The controller 104 is configured to open the main switching device 120 of the relay 110 for overvoltage (OV) protection in the presence of unacceptable voltages sensed by the voltage sensor 130. Overvoltage (OV) protection in the aircraft voltage bus 106 and relay 110 can be redundant/dissimilar to generator OV protection to protect the aircraft load(s) 108 from damage. The controller 104 is configured to use the voltage feedback to monitor for under-voltage for prognostic and health monitoring (PHM).

A temperature sensor 134 is operatively connected in thermal communication with the relay 110, and is operatively connected to the controller 104 by line 136 to communicate temperature feedback to the controller 104 indicative of temperature of the relay 110. The controller 104 is configured to use the temperature feedback for prognostic and heath monitoring (PHM). Temperature sensing of relay contacts and/or busbars allows for protection from thermal damage and can provide PHM to detect increasing temperature trends of failing bolted joint or relay contacts.

The controller 104 is configured to control the coil driver 116 to close the main switching device 120 to connect the aircraft load 108 to be supplied with power by the aircraft voltage bus 106 in a first position (the closed switch position) of the main switching device 120, and to control the coil driver 116 to open the main switching device 120 to disconnect the aircraft load 108 from being supplied by the aircraft voltage bus 106 in a second position (the opened switch position) of the main switching device 120.

The coil driver 116 is configured to receive a command, e.g. on line 140, from the controller 104 to close the main switching device 120, and in response to issue a first pulse width modulation (PWM) current to the coil 112 through line 142 for a first period of time for closing the main switching device 120 followed by a second period with a second PWM current for holding the main switching device 120 closed. The second PWM current has a lower duty cycle than the first PWM current. The coil drive 116 is an advanced coil driver relative to traditional configurations that have relays with an economizer coil and switch built in that allow for a high current (at high losses) for pull-in and a lower current (at low losses) for holding the relay in the active position. The advanced coil driver 116 disclosed herein removes the need for such an economizer to reduce contactor costs. The controller 104 is configured to use the coil driver 116 to adjust current levels in the coil 112 during the first period based on temperature feedback from the temperature sensor 134. This provides for custom coil drive over current (OC) limiting with temperature compensation with relay maximum current demand and reduced voltage hold at high temperature soak.

The coil 112 is a pull-in coil and the relay 110 can optionally include a separate holding coil 144 (indicated in Fig. 1 with broken lines) operatively connected to the coil driver 116 and to the main switching device 120. In this optional configuration, the coil driver 116 is configured to receive a command from the controller 104 to close the main switching device 120, and in response to drive current to the pull-in coil 112 and to the holding coil 114 for a first period of time for closing the main switching device 120, followed by depowering the pull-in coil 112 and driving current only to the holding coil 144 for holding the main switching device closed 120. Closing the main switching device 120 requires more power than merely holding it closed, so this configuration allows the power needed for closing (e.g. at 32 V), but does not waste power for holding the main switching device 120 after it is closed (e.g. at 18 V). Both options allow the coil driver 116 to be powered from an increased voltage level (e.g. 32 V) to increase pull-in current and decrease pull-in time relative to the voltage level (e.g. 18 V) for holding. Both configurations (the one with a single PWM coil 112 and the one with the separate holding coil 144) can be combined with the temperature sensing as described above to adjust the pull-in current levels based on temperature; i.e., drive higher currents when the relay is cold to improve performance. Both configurations can implement the PHM features described in U.S. Patent Application Serial No. 17/521,395 filed November 8, 2021 the content of which is incorporated by reference herein in its entirety. The conventional controller coil drive powering of a relay coil is to provide voltage (and amperage) from a power source and the relay uses the voltage for coil amperage for the magnetic actuation. The LCMU 102 uses both the voltage available and the relay coil position and adjusts the PWM amperage power to protect the relay coil and ensure correct operation. If voltage is steady state from the conventional controller, a colder coil has lower resistance and would draw more current with the potential for over current trip of the conventional coil driver, and hot coil has a higher resistance that draws less current with the potential for relay to have sufficient power to actuate. The relay operation has a requirement for amperage to form the magnetic field and the LCMU 102 can optimize available amperage power for the relay coil based on relay operation conditions to increase or decrease voltage duty cycle for correct relay coil operating amperage.

The aircraft interface 114 can include a communication bus, such as a CAN (controller area network) Bus or equivalent, that operatively connects the controller 104 to an external aircraft controller 146 for control and status of the relay 110. The controller 104 is configured to count operating power cycles of the relay 110 for prognostic and health monitoring (PHM).

With reference now to Fig. 2 wherein items discussed that are not labeled in Fig. 2 are labeled in Fig. 1, a method of power switching includes receiving a command 200 into an LCMU 102 from an external aircraft controller 146 to power an aircraft load 108 from an aircraft voltage bus 106. The method includes in response to the command 200, controlling a relay 110 to connect or disconnect the aircraft voltage bus 106 from an aircraft load 108, as indicated in box 202. Controlling the relay 110 includes current monitoring the relay 110, e.g. with current sensor 124, as indicated with box 204 and voltage monitoring the relay, e.g. with the voltage sensor 130 as indicated with box 206.

Controlling the relay 110 includes receiving voltage feedback into the LCMU 102 indicative of voltage across the relay 110 and controlling the relay using the coil control 116 of the LCMU 102 to open and disconnect the aircraft load 108 from the aircraft voltage bus 106 as needed for overvoltage (OV) protection, which OV protection is part of box 206. The LCMU can be powered by external power, as indicated by box 216. The method includes communicating voltage data to the external aircraft controller 146 for prognostic and health monitoring (PHM), as indicated with box 208. Controlling the relay 110 includes receiving current feedback into the LCMU 102 indicative of current passing through the relay 110 from the aircraft voltage bus 106 to the aircraft load 108 as indicated with box 204, and controlling the relay using the coil control 116 of the LCMU 102 to open and disconnect the aircraft load 108 from the aircraft voltage bus 106 as needed for overcurrent (OC) protection, which OC protection is part of box 204. The method includes communicating current data to the external aircraft controller 146 for prognostic and health monitoring (PHM), as indicated with box 208. The method can include receiving temperature feedback into the LCMU 102, as indicated with box 210 indicative of temperature of the relay 110, and using the temperature feedback for at least one of controlling the relay 110 and/or PHM. The method includes outputting of feedback from the LCMU 102 to the external aircraft controller 146 (or other system(s)) relating to status, operation, and health of the relay 110, as indicated in box 208. The LCMU also includes functions for forming the signal to the external system(s), as indicated in box 212, and confirming the open/closed status of the main switching device 120, as indicated in box 214.

With reference again to Fig. 1, the main switching device 120 and the current censor 124 can be configured for single phase or 3-phase AC current sensing. The figures show single phase for simplicity. AC systems can use current transformers as the current sensor 124. DC systems can use Hall effect sensors (or similar such as Rogowski or giant magneto-resistive (GMR) sensors) as the current sensor 124. The sensing and control functions can be integrated with the relay 110 and sensors 124, 130, 134 to provide a single LRU (line replaceable unit) solution. It is also contemplated that the sensing and control functions can be provided on a separate assembly and connected to the relay 110 and sensors 124, 130, 134 via electrical wiring. If the sensing and control functions are provided on a separate assembly, that assembly may contain multiple instances to interface with multiple relays.

Systems and methods as disclosed herein provide potential benefits over more traditional configurations, including the following potential benefits. They can provide a coil drive and over-current protection system to eliminate relay economizer switch functions to eliminates the failure mode of 'failure to economize" where a high amperage pull in coil current will result in coil winding overheat failure. They can provide for coil drive cycle counting, which provides PHM of relay life against design life of number of cycles. They can provide for thermal monitoring: measuring component temperature (e.g., using a resistive thermal device (RTD)) for relay and local component ambient temperatures. They can provide for writing to memory the component temperature and a local ambient temperature for PHM. They can provide for voltage Monitoring at switched power input and output for use as a dissimilar Over Voltage (OV) monitoring and control. This would be protection for redundant OV at input and under voltage (UV) at output. They can provide for monitoring amperage current through the switch gear and communicating power flow to provide trip over current curve (aka I^2t) control of switch gear output. They can provide switching component voltage drop monitoring, used for PHM to report monitored voltage drop across component or portion of panel, as a leading indicator of a component or assembly problem. They can provide control of switch gear (relays or contactors) from internal logic (voltage or status) or from external controllers. They can provide switch gear control information from data buses or from system configuration status to external system for switch gear control via communication bus or discrete input/output analog signals. They can provide for monitoring thermal aspects of switch gear (mounting, contacts, bus bar, and the like) for PHM.

The methods and systems of the present disclosure, as described above and shown in the drawings, provide for control and monitoring of relays such as used in aircraft. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A system comprising:
a load control monitoring unit, LCMU, (102) wherein the LCMU includes a controller (146) operatively connected for input and output with an aircraft interface and a coil driver (116) operatively connected to be controlled by the controller;
a relay (110) operatively connected to the LCMU for controlling connection and disconnection of an aircraft voltage bus to and from an aircraft load, wherein the relay includes a coil (112) operatively connected to be powered by the coil driver, an auxiliary switching device (118) operatively coupled to be actuated by a magnetic field from the coil, and a main switching device (120) operatively connected to be actuated by the magnetic field from the coil, wherein the auxiliary switching device is operatively connected to the controller to provide feedback indicative of position of the main switching device;
a current sensor (124) operatively connected to a load side of the main switching device and to the controller to provide current feedback to the controller indicative of current in the load side of the main switching device; and
a voltage sensor (130) operatively connected to a voltage bus side of the main switching device and to the controller to provide voltage feedback to the controller indicative of current in the voltage bus side of the main switching device,
wherein the controller is configured to control the coil driver to control the main switching device, and to provide overvoltage protection for the relay.

2. The system as recited in claim 1, wherein the controller (146) is configured to open the main switching device of the relay for overvoltage, OV, protection in the presence of unacceptable voltages sensed by the voltage sensor.

3. The system as recited in claim 1 or 2, wherein the controller (146) is configured to use the voltage feedback to monitor for under-voltage for prognostic and health monitoring, PHM.

4. The system as recited in any preceding claim, wherein the controller (146) is configured to use the current feedback to open the main switching device of the relay for overcurrent, OC, protection in the presence of unacceptable current sensed by the current sensor.

5. The system as recited in any preceding claim, further comprising a temperature sensor (134) operatively connected to the relay and to the controller to communicate temperature feedback to the controller indicative of temperature of the relay, wherein the controller is configured to use temperature feedback for prognostic and heath monitoring, PHM.

6. The system as recited in any preceding claim, further comprising the aircraft voltage bus (106) operatively connected to the voltage bus side of the main switching device, and optionally further comprising the aircraft load (108) operatively connected to the load side of the main switching device, wherein the controller is configured
to:
control the coil driver to close the main switching device to connect the aircraft load to be supplied by the aircraft voltage bus in a first position of the main switching device, and
control the coil driver to open the main switching device to disconnect the aircraft load from being supplied by the aircraft voltage bus in a second position of the main switching device.

7. The system as recited in any preceding claim, wherein the coil driver is configured to: receive a command from the controller to close the main switching device, and in response to issue a first pulse width modulation, PWM, current to the coil for a first period of time for closing the main switching device followed by a second period with a second PWM current for holding the main switching device closed, wherein the second PWM current has a lower duty cycle than the first PWM current, and optionally wherein the controller is configured to adjust current levels during the first period based on temperature feedback.

8. The system as recited in any preceding claim, wherein the coil is a pull-in coil and wherein the relay includes a holding coil operatively connected to the coil driver and to the main switching device, wherein the coil driver is configured to:
receive a command from the controller to close the main switching device, and in response to drive current to the pull-in coil and to the holding coil for a first period of time for closing the main switching device, followed by depowering the pull-in coil and driving current only to the holding coil for holding the main switching device closed, and optionally wherein the controller is configured to adjust current levels during the first period based on temperature feedback.

9. The system as recited in any preceding claim, further comprising a communication bus operatively connecting the controller to an external aircraft controller for control and status of the relay.

10. The system as recited in any preceding claim, wherein the controller is configured to count operating power cycles of the relay for prognostic and health monitoring, PHM.

11. A method of power switching comprising:
receiving a command from an external aircraft controller to power an aircraft load from an aircraft voltage bus; and
in response to the command from the external aircraft controller, controlling a relay to connect or disconnect the aircraft voltage bus from the aircraft load, wherein controlling the relay includes current monitoring the relay and voltage monitoring the relay.

12. The method as recited in claim 11, wherein controlling the relay includes receiving voltage feedback indicative of voltage across the relay and controlling the relay to open and disconnect the aircraft load from the aircraft voltage bus as needed for overvoltage, OV, protection, and optionally further comprising communicating voltage data to the external aircraft controller for prognostic and health monitoring, PHM,.

13. The method as recited in claim 11 or 12, wherein controlling the relay includes receiving current feedback indicative of current passing through the relay from the aircraft voltage bus to the aircraft load, and controlling the relay to open and disconnect the aircraft load from the aircraft voltage bus as needed for overcurrent, OC, protection, and optionally further comprising communicating current data to the external aircraft controller for prognostic and health monitoring, PHM.

14. The method as recited in claim 11, 12 or 13, further comprising receiving temperature feedback indicative of temperature of the relay, and using the temperature feedback for at least one of controlling the relay and/or predictive health monitoring.

15. The method as recited in any of claims 11 to 14, further comprising outputting feedback to the external aircraft controller relating to status, operation, and health of the relay.
